# EUROPÄISCHE PATENTANMELDUNG

(11) **EP 2 466 360 A1**
(43) Veröffentlichungstag der Anmeldung: **20.06.2012**
(21) Anmeldenummer: 11193840.3
(22) Anmeldetag: 15.12.2011
(51) Int. Cl.: G02B 21/36, G02B 23/00, G06F 17/30

(54) **Optische Vorrichtung, insbesondere Fernrohr oder Mikroskop**

(30) Priorität: 17.12.2010 DE 102010061302
(71) Anmelder: Dalheimer, Natascha, 50935 Köln (DE); Dalheimer, Anton, 50935 Köln (DE)
(72) Erfinder: Dalheimer, Natascha, 50935 Köln (DE); Dalheimer, Anton, 50935 Köln (DE)
(74) Vertreter: Freischem, Stephan

(57) **Zusammenfassung**

Die Erfindung betrifft eine optische Vorrichtung mit mindestens einem Okular (2) und mindestens einem Objektiv (1), insbesondere ein Fernrohr.

Aufgabe der Erfindung ist es, dem Benutzer der optischen Vorrichtung zusätzliche Kenntnisse über die betrachteten Gegenstände zu vermitteln.

Diese Aufgabe wird durch folgende Merkmale gelöst:
● einen digitalen Bildsensor (5), auf den das durch das Objektiv (2) sichtbare Bild geleitet wird,
● einen Prozessor, der zur Auswertung des von dem Bildsensor (5) aufgenommenen Bildes bestimmt ist,
● mindestens einen Datenspeicher, in dem die Daten von Abbildungen von mehreren Objekten und mindestens eine jedem der Objekte zugeordnete Information gespeichert sind, und eine
● Ausgabeeinheit, die zur Ausgabe der gespeicherten Information geeignet ist,

wobei der Prozessor bei der Auswertung das durch den Bildsensor (5) aufgenommene Bild mit den gespeicherten Abbildungsdaten von Objekten vergleicht und bei Übereinstimmung des Bildes mit den Abbildungsdaten eines der Objekte die Ausgabe der diesem Objekt zugeordneten Information mittels der Ausgabeeinheit veranlasst.

## Beschreibung

Die Erfindung betrifft eine optische Vorrichtung mit mindestens einem Okular und mindestens einem Objektiv, insbesondere ein Fernrohr oder Mikroskop.

Fernrohre oder Ferngläser sind üblicherweise als Monokular oder Binokular ausgebildet. Ein Monokular weist ein Objektiv und ein Okular auf, so dass der Benutzer nur mit einem Auge durch das Fernrohr schaut. Ein Binokular weist zwei Objektive und zwei Okulare auf, welche vor beide Augen gehalten werden. Die vorliegende Erfindung betrifft insbesondere als Monokular ausgebildete Fernrohre, ist aber auch für Binokulare verwendbar. Ähnliche optische Vorrichtungen sind Mikroskope, die anders als Fernrohre nicht weit entfernte Gegenstände vergrößern sondern sehr kleine Gegenstände meist mit einer Größe unterhalb des Auflösungsvermögens des Auges vergrößern.

Aufgabe der Erfindung ist es, dem Benutzer der optischen Vorrichtung zusätzliche Kenntnisse über die betrachteten Gegenstände zu vermitteln.

Zur Lösung dieser Aufgabe weist die optische Vorrichtung folgendes auf:
● einen digitalen Bildsensor, auf den das durch das Objektiv sichtbare Bild geleitet wird,
● einen Prozessor, der zur Auswertung des von dem Bildsensor aufgenommenen Bildes bestimmt ist,
● mindestens einen Datenspeicher, in dem die Daten von Abbildungen von mehreren Objekten und mindestens eine jedem der Objekte zugeordnete Information gespeichert sind, und
● eine Ausgabeeinheit, die zur Ausgabe der gespeicherten Information geeignet ist,
wobei der Prozessor bei der Auswertung das durch den Bildsensor aufgenommene Bild mit den gespeicherten Abbildungsdaten von Objekten vergleicht und bei Übereinstimmung des Bildes mit den Abbildungsdaten eines der Objekte die Ausgabe der diesem Objekt zugeordneten Information mittels der Ausgabeeinheit veranlasst.

Im Folgenden wird die Erfindung vornehmlich anhand des Beispiels eines Fernrohres beschrieben. Sie kann aber auch an anderen ähnlichen Vorrichtungen mit Objektiv und Okular umgesetzt werden.

Gemäß der Erfindung wird das durch das Okular sichtbare Bild gleichzeitig auf einen Bildsensor abgebildet. Der Bildsensor ermöglicht den Vergleich des betrachteten Bildes mit abgespeicherten Objekten. Durch eine geeignete Software wird eine Übereinstimmung zwischen dem durch den Bildsensor aufgenommenen Bild und den abgespeicherten Objekten ermittelt. Die Bildauswertungs-Software kann dabei ähnlichen Konturenverlauf, ähnliche Farbe, ähnliche Musterung und weitere Faktoren isoliert oder in Kombination miteinander berücksichtigen. Bei der Feststellung einer hinreichenden Übereinstimmung mindestens eines dieser Faktoren wird eine abgespeicherte Information über eine Ausgabeeinheit für den Benutzer des Fernrohres ausgegeben.

Das Fernrohr ermöglicht folglich die Identifikation von Objekten in der Umwelt. Beispielsweise hilft es Naturfreunden beim Erkennen verschiedener Schmetterlinge, Vogelarten, Baumarten und anderer Pflanzen und Tiere der Natur. Ferner können Gebäude, Bergformationen, Landfahrzeuge, Wasserfahrzeuge und Luftfahrzeuge und beliebige andere Objekte in den Datenspeicher abgespeichert sein. Bei anderen optischen Vorrichtungen wie z.B. Mikroskopen können Abbildungsdaten von Kleinstlebewesen oder von Stoffstrukturen wie z.B. Kristallstrukturen abgespeichert sein.

In der Praxis kann der Datenspeicher wiederbeschreibbar ausgebildet sein. In dem wiederbeschreibbaren Datenspeicher können verschiedene Datenbanken mit Abbildungsdaten von Objekten unterschiedlicher Kategorien und diesen Objekten zugeordneten Informationen abgespeichert werden. Der Datenspeicher kann entweder über eine Schnittstelle wie eine USB-Schnittstelle oder eine andere standardisierte Datenübertragungs-Schnittstelle zugreifbar sein. Alternativ kann die optische Vorrichtung über ein drahtloses Eingabe-/Ausgabemodul wie einem WLAN-Empfänger verfügen. Daten können dann über WLAN auf dem Datenspeicher gespeichert und überschrieben werden.

Die abgespeicherten Daten der Abbildungen müssen nicht notwendigerweise die vollständigen Abbildungen selbst sein. Es ist auch möglich, bestimmte Kenndaten wie Farbverteilung, Farbintensität und so weiter abzuspeichern und zur Auswertung der aufgenommenen Bilder zu verwenden.

Das Fernrohr kann über ein separates Objektiv für die Aufnahme des auf den Bildsensor zu leitenden Bildes verfügen. Das Bildsensor-Objektiv ist parallel zu dem Fernrohr-Objektiv ausgerichtet.

Ferner kann ein Strahlenteiler, insbesondere ein teildurchlässiger Spiegel das durch das Objektiv aufgenommene Bild, welches der Betrachter im Okular sieht, auf den Bildsensor leiten. Dies ist insbesondere bei optischen Vorrichtungen vorteilhaft, die Mikroskope bilden, da das Bild dann in Vergrößerter Form auf den Bildsensor geleitet werden kann.

Die optische Vorrichtung kann eine oder mehrere beliebige geeignete Ausgabeeinheiten umfassen, welche den Benutzer die zu den verschiedenen Objekten abgespeicherten Informationen wiedergibt. Insbesondere kann die Ausgabeeinheit einen Lautsprecher aufweisen. Die gespeicherte Information wird dann als Sprachausgabe mittels des Lautsprechers erfolgen. Die gespeicherte Information kann entweder als aufgenommene Sprache, sogenannte Samples, abgespeichert sein. Diese aufgenommenen Samples können sofort bei Übereinstimmung des aufgenommenen Bildes mit den Daten einer abgespeicherten Abbildung eines Objektes wiedergegeben werden. Samples haben allerdings einen hohen Speicherplatzbedarf. Alternativ können die gespeicherten Informationen als Buchstabenfolge abgespeichert sein. Eine derartige Information kann mit sehr geringem Platzbedarf abgespeichert werden. Die Wiedergabe kann dann über einen Sprachgenerator erfolgen, der synthetisch aus der abgespeicherten Buchstabenfolge Worte bildet, die vom Lautsprecher ausgegeben werden. Alternativ oder zusätzlich kann die Ausgabeeinheit eine Vorrichtung zur Darstellung von Schriftzeichen in dem Okular aufweisen. Beispielsweise kann eine kleine Flüssigkristallanzeige (LCD-Anzeige) vor dem Okular angeordnet sein, auf der zur Ausgabe der Informationen Schriftzeichen dargestellt werden können. Auf diese Weise kann die abgespeicherte Information als geschriebener Text dargestellt werden. Selbstverständlich können eine Lautsprecherausgabe und eine Schriftausgabe miteinander kombiniert werden.

In der Praxis kann die optische Vorrichtung (z.B. Fernrohr) einen manuell betätigbaren Signalgeber aufweisen, der ein Signal an den Prozessor abgibt. Vorzugsweise ist der Signalgeber als Drucktaster ausgebildet, auf dem ein Finger des Benutzers während der Benutzung des Fernrohres ruht. Bei Betätigung des Signalgebers kann der Prozessor durch das Signal dazu veranlasst werden, dass durch den Bildsensor aufgenommene Bild auszuwerten und bei Übereinstimmung mit einer abgespeicherten Darstellung eines Objektes die dem Objekt zugeordnete Information auszugeben.

Alternativ oder zusätzlich kann der Prozessor durch das Signal veranlasst werden, das durch den Bildsensor aufgenommene Bild in dem Datenspeicher abzuspeichern. Auf diese Weise dient das Fernrohr bzw. die optische Vorrichtung auch als Fotoapparat. Beim Abspeichern des aufgenommenen Bildes kann die Information in dem Datenspeicher abgespeichert werden, die dem mit dem Bild übereinstimmenden Objekt zugeordnet ist. Die verschiedenen Funktionen (Auswertung des Bildes auf dem Bildsensor bzw. Aufnahme des Bildes auf dem Bildsensor durch Abspeicherung im Datenspeicher) können durch verschiedene Arten der Signale erfolgen. Die einfache Auswertung kann durch einfaches Betätigen des Signalgebers veranlasst werden. Die Aufnahme kann durch zweifaches Betätigen in kurzer zeitlicher Abfolge (Doppelklick) bewirkt werden.

Die Information, die zu jedem Objekt abgespeichert ist, kann verschiedenen Umfang und verschiedenen Inhalt haben. Zunächst liegt es nahe, die Namen der Objekte, deren Darstellung abgespeichert ist, als Information abzuspeichern. Dies sind beispielsweise Vogelarten, andere Tierarten, Pflanzenarten, Fahrzeugtyp und ―hersteller etc. Ferner können Eigenschaften der Objekte abgespeichert werden. Zu Baumarten können beispielsweise deren maximales Alter und die maximale Höhe gespeichert werden. Zu Vogelarten kann ebenfalls das maximale Alter, die maximale Fluggeschwindigkeit und andere Eigenschaften abgespeichert werden. Zu Gebäuden können Angaben über die Geschichte und die Bedeutung der jeweiligen Gebäude abgespeichert werden.

Der große Vorteil des erfindungsgemäßen Fernrohres ist die Tatsache, dass während des Betrachtens die betrachteten Bilder ausgewertet und die Informationen dem Benutzer des Fernrohres mitgeteilt werden können. Der Benutzer braucht das Fernrohr nicht abzusetzen oder keine anderen Betätigungselemente zu bedienen. Während der Benutzung des Fernrohres ruht sein Finger auf dem Signalgeber, der die Bildauswertung und ggf. die Bildaufnahme veranlasst.

Selbstverständlich können auch mehrere Signalgeber vorhanden sein. Es ist auch möglich, durch Betätigen des Signalgebers zwischen dem Bild, welches durch das Objektiv aufgenommen wird, und einem Informationsbildschirm, auf dem die dem aufgenommenen Bild zugeordneten Informationen wiedergegeben sind, umzuschalten.

Zum Betrieb des Prozessors und des Datenspeichers sowie der Ausgabeeinheit weist das Fernrohr schließlich eine Energiequelle auf. Diese ist bei einer praktischen Ausführungsform ein wiederaufladbarer Akkumulator, insbesondere eine Lithium-lonen-Batterie, wie sie für Mobiltelefone bekannt ist. Jede andere Stromquelle, auch herkömmliche Batterien, können zum Betrieb des erfindungsgemäßen Fernrohres verwendet werden.

Zwischen Objektiv und Okular können weitere optische Elemente angeordnet sein, insbesondere in Umkehrprisma oder eine Umkehrlinse, die das Bild für den Betrachter umkehren, damit oben liegende Gegenstände auch oben sichtbar sind.

Eine Ausführungsform der Erfindung, im vorliegenden Fall ein Fernrohr, ist nachfolgend unter Bezugnahme auf die beigefügten Zeichnungen beschrieben.
Fig. 1 zeigt eine schematische Schnittdarstellung einer als Monokular ausgebildeten Ausführungsform des erfindungsgemäßen Fernrohres.
Fig. 2 zeigt eine schematische Draufsicht der Auswerteeinheit des Fernrohres aus Fig. 1.

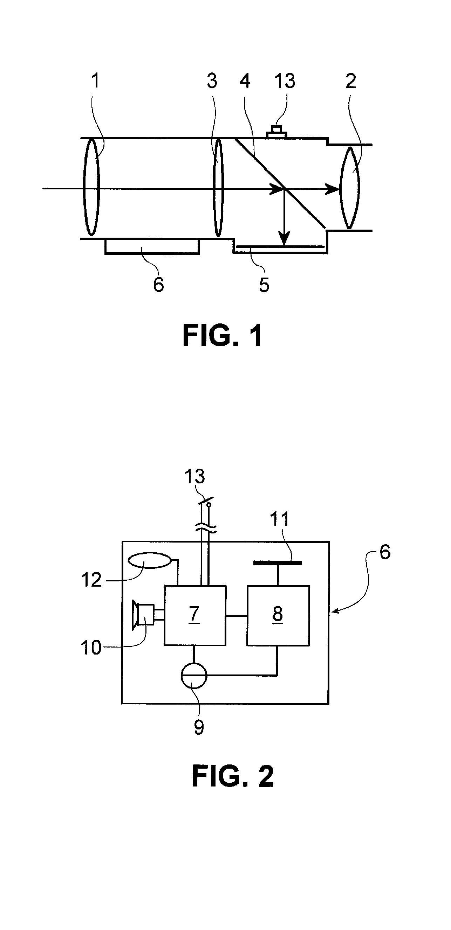

Das Fernrohr in Fig. 1 ist als Monokular ausgebildet. Es weist ein Objektiv 1 und ein Okular 2 auf. Dazwischen ist eine Umkehrlinse 3 angeordnet, welche das durch das Objektiv eintretende Bild umkehrt, so dass oben liegende Teile oben auf der Netzhaut des durch das Okular 2 blickenden Betrachters abgebildet sind. Objektiv 1 und/oder Okular 2 können zur Scharfstellung des Bildes zueinander verschiebbar ausgebildet sein. Ferner können weitere optische Elemente für eine Optimierung des zu betrachtenden Bildes vorhanden sein.

Das einfache Monokular-Fernrohr ist nur als Beispiel dargestellt. Die Erfindung kann selbstverständlich auch mit komplexeren, z.B. Binokular-Fernrohren oder anderen optischen Vorrichtungen wie Mikroskopen verwirklicht werden.

Hinter der Umkehrlinse 3 ist ein teildurchlässiger Spiegel 4 angeordnet, der einen Teil des durch das Objektiv 1 eintretenden Lichts auf einem Bildsensor 5 ablenkt. Der Bildsensor 5 ist vorzugsweise als CCD-Sensor ausgebildet. Wenn die aufgenommen Bilder auch abgespeichert werden sollen, ist vorzugsweise ein Farb-CCD-Sensor als Bildsensor vorzusehen.

Der Bildsensor 5 ist mit einer Auswerteeinheit 6 gekoppelt. Die Bestandteile der Auswerteeinheit 6 sind in Fig. 2 dargestellt.

Die Auswerteeinheit 6 umfasst einen Prozessor 7, mit dem die durch den Bildsensor 6 aufgenommenen Bilder ausgewertet werden können. Im Prozessor 7 ist ein Datenspeicher 8 zugeordnet. Der Datenspeicher 8 ist vorzugsweise ein Festkörperlaufwerk (SSD = Solid State Drive). Diese weisen bei sehr geringer Größe und geringem Gewicht erhebliche Datenkapazitäten in der Größenordnung von 1 GB und mehr auf. Ferner weist die Auswerteeinheit 6 eine Stromquelle 9, insbesondere einen wieder aufladbaren Lithium-lonen-Akku und einen Lautsprecher 10 als Ausgabeeinheit auf.

Schließlich kann die Auswerteeinheit 6 einen Steckplatz 11 für eine entfernbare Speicherkarte (z.B. SD-Speicherkarte) aufweisen, auf der aufgenommene Bilder aufgezeichnet werden können. Außerdem kann eine Datenschnittstelle 12 vorgesehen sein.

Über die Datenschnittstelle können unterschiedliche Dateien mit den Abbildungen oder Abbildungsparametern verschiedener Objekte in den Datenspeicher geladen werden. Ferner können Aufnahmen aus dem Datenspeicher 8 heruntergeladen werden.

Für die Auslösung der Aufnahme eines Bildes oder des Vergleichs eines Bildes mit den abgespeicherten Abbildungsdaten ist ein Signalgeber 13 vorgesehen, der als einfacher Unterbrecher dargestellt und mit dem Prozessor 7 verbunden ist.

Die Erkennung und ggf. Aufnahme der betrachteten Bilder ist die Hauptfunktion von Bildsensor und Auswerteeinheit. Es kann aber noch eine andere Funktion wie zum Beispiel ein Autofokus der optischen Elemente des Fernrohrs verwirklicht werden. Das vom Bildsensor aufgenommene Bild kann durch die Auswerteeinheit ausgewertet werden und die Ausgewerteten Informationen können zur automatischen Verstellung der Bildschärfe eingesetzt werden. Hierzu ist der Abstand zwischen Objektiv und Okular und ggf. die Lagen weiterer optischer Elemente motorisch verstellbar auszubilden. Der Prozessor steuert die Antriebsmotoren (nicht dargestellt). Zur automatischen Fokussierung des Bildes kann der Prozessor beispielsweise die aufeinanderfolgenden Helligkeitswerte einer Zeile oder einer Spalte des CCD-Sensors als Stützpunkte einer Funktion ansehen und eine FFT-Anlasyse (Fast-Fourrier-Transformation) durchführen. Dabei werden die verschiedenen Frequenzanteile des Signalverlaufs in der Zeile oder Spalte quantitativ ermittelt. Bei einem scharfen Bild sind die Kontraste besonders stark ausgeprägt und die Signalsprünge an den Kanten sind besonders stark. Starke, nahezu rechteckige Signalsprünge führen zu hohen hochfrequenten Anteilen im Signal. Es kann folglich die Einstellung derart erfolgen, dass der hochfrequente Anteil des Signals ein Maximum erreicht.

### Bezugszeichenliste

- 1: Objektiv
- 2: Okular
- 3: Umkehrlinse
- 4: Spiegel
- 5: Bildsensor
- 6: Auswerteeinheit
- 7: Prozessor
- 8: Datenspeicher
- 9: Stromquelle
- 10: Lautsprecher
- 11: Steckplatz für Speicherkarte
- 12: Datenschnittstelle
- 13: Signalgeber

## Patentansprüche

1. Optische Vorrichtung mit mindestens einem Okular (2) und mindestens einem Objektiv (1), **gekennzeichnet durch**
● einen digitalen Bildsensor (5), auf den das **durch** das Objektiv (2) sichtbare Bild geleitet wird,
● einen Prozessor (7), der zur Auswertung des von dem Bildsensor (5) aufgenommenen Bildes bestimmt ist,
● mindestens einen Datenspeicher (8), in dem die Daten von Abbildungen von mehreren Objekten und mindestens eine jedem der Objekte zugeordnete Information gespeichert sind, und eine
● Ausgabeeinheit (10), die zur Ausgabe der gespeicherten Information geeignet ist,
wobei der Prozessor (7) bei der Auswertung das **durch** den Bildsensor (5) aufgenommene Bild mit den gespeicherten Abbildungsdaten von Objekten vergleicht und bei Übereinstimmung des Bildes mit den Abbildungsdaten eines der Objekte die Ausgabe der diesem Objekt zugeordneten Information mittels der Ausgabeeinheit (10) veranlasst.

2. Optische Vorrichtung nach Anspruch 1, **dadurch gekennzeichnet, dass** ein Strahlenteiler, insbesondere ein teildurchlässiger Spiegel (4), zwischen Objektiv (1) und Okular (2) angeordnet ist, der das durch das Objektiv (1) aufgenommene Bild auf den Bildsensor (5) wirft.

3. Optische Vorrichtung nach Anspruch 1 oder 2, **dadurch gekennzeichnet, dass** die Ausgabeeinheit einen Lautsprecher (10) aufweist und dass die gespeicherte Information als Sprachausgabe mittels des Lautsprechers (10) erfolgt.

4. Optische Vorrichtung nach einem der vorangehenden Ansprüche, **dadurch gekennzeichnet, dass** die Ausgabeeinheit eine Vorrichtung zur Darstellung von Schriftzeichen in dem Okular (2) aufweist und dass die gespeicherte Information als Schriftdarstellung mittels der genannten Vorrichtung erfolgt.

5. Optische Vorrichtung nach einem der vorangehenden Ansprüche, **dadurch gekennzeichnet, dass** der Datenspeicher (8) ein wiederbeschreibbarer Datenspeicher ist, in dem verschiedene Datenbanken mit Abbildungsdaten von Objekten und den Objekten zugeordnete Informationen abspeicherbar sind.

6. Optische Vorrichtung nach einem der vorangehenden Ansprüche, **dadurch gekennzeichnet, dass** sie einen manuell betätigbaren Signalgeber (13) aufweist, der ein Signal an den Prozessor (7) abgibt.

7. Optische Vorrichtung nach Anspruch 6, **dadurch gekennzeichnet, dass** der Prozessor (7) durch das Signal veranlasst wird, das durch den Bildsensor (5) aufgenommene Bild auszuwerten.

8. Optische Vorrichtung nach Anspruch 6 oder 7, **dadurch gekennzeichnet, dass** der Prozessor (7) durch das Signal veranlasst wird, das durch den Bildsensor (5) aufgenommene Bild in dem Datenspeicher abzuspeichern.

9. Optische Vorrichtung nach Anspruch 8, **dadurch gekennzeichnet, dass** in zusammen mit dem durch den Bildsensor (5) aufgenommenen Bild die Information in dem Datenspeicher (8) abgespeichert wird, die dem mit dem Bild übereinstimmenden Objekt zugeordnet ist.

10. Optische Vorrichtung nach einem der vorangehenden Ansprüche, **dadurch gekennzeichnet, dass** zwischen Okular (2) und Objektiv (1) mindestens eine weitere optische Elemente (3) angeordnet ist.
